# NEUE EUROPÄISCHE PATENTSCHRIFT

(11) **EP 2 453 426 B2**
(45) Veröffentlichungstag und Bekanntmachung des Hinweises auf die Entscheidung über den Einspruch: **17.03.2021**
(45) Hinweis auf die Patenterteilung: 02.07.2014
(21) Anmeldenummer: 10014615.8
(22) Anmeldetag: 15.11.2010
(51) Int. Cl.: G08B 29/02, G01S 7/497, G01S 17/02, G01S 17/74

(54) **Überwachungssensor mit Selbsttest**
Self-testing monitoring sensor
Capteur de surveillance doté d'un autotest

(43) Veröffentlichungstag der Anmeldung: 16.05.2012
(73) Patentinhaber: Cedes AG, 7302 Landquart (CH)
(72) Erfinder: Beat De Coi, 7320 Sargans (CH); Leutenegger, Tobias, 7000 Chur (CH)
(74) Vertreter: Otten, Roth, Dobler & Partner mbB Patentanwälte

(56) Entgegenhaltungen:
- EP-A1- 1 932 994
- EP-A2- 1 933 167
- EP-B1- 0 862 810
- EP-B1- 1 345 444
- DE-A1-102008 013 982
- DE-A1-102008 032 216
- DE-B3-102007 025 373
- DE-U1-202004 017 230
- US-A- 4 752 768
- US-A- 4 752 768
- US-A- 5 675 150
- US-A1- 2006 086 895
- US-A1- 2009 212 943
- US-A1- 2012 150 480
- KAHLMANN T ET AL: "Calibration of the fast range imaging camera SwissRanger(TM) for the use in the surveillance of the environment", PROCEEDINGS OF SPIE, SPIE, USA, Bd. 6396, 1. Januar 2006 (2006-01-01), Seiten 639605-1, XP002539116, ISSN: 0277-786X, DOI: DOI:10.1117/12.684458

## Beschreibung

Die vorliegende Erfindung betrifft einen Sensor für die Überwachung eines Überwachungsbereichs, insbesondere eines im Öffnungsbereich einer Tür liegenden Raumbereichs.

### Stand der Technik:

Zur Erhöhung der Betriebssicherheit von automatisch zu öffnenden Türen und/oder Toren ist die Verwendung von handelsüblichen Überwaehungssensoren bekannt, die bei Erfassung eines Objekts in einem durch die Bewegung der zu öffnenden Tür und/oder des zu öffnenden Tores liegenden Gefahrenbereich eine potentielle Gefahrensituation signalisieren.

Aus der US 4 752 768 A geht ein Überwachungssensor für die Überwachung eines Überwachungsbereichs hervor. Bei ein Test der Funktionsfähigkeit erfolgt. Dazu wird ein Infrarotsignal ausgesendet, von einem am Ende des Überwachungsbereichs speziell angebrachten Reflektor zurückgeworfen und von einem separaten Detektor erfasst. Wird das Signal nicht detektiert, wird ein Alarm ausgelöst. Aus diesem Dokument geht ein Überwachungssensor nach dem Oberbegriff des Anspruchs 1 hervor.

### Aufgabe der Erfindung:

Der Erfindung liegt die Aufgabe zugrunde einen Sensor gemäß dem einleitend genannten Stand der Technik zu verbessern.

Die Lösung dieser Aufgabe erfolgt, ausgehend vom Oberbegriff des Anspruchs 1, durch dessen kennzeichnende Merkmale. In den Unteransprüchen sind vorteilhafte und zweckmäßige Weiterbildungen angegeben.

Dementsprechend betrifft die vorliegende Erfindung einen Überwachungssensor für die Überwachung eines Überwachungsbereichs, nämlich eines im Öffnungsbereich einer Tür, eines Tores oder eines Fensters liegenden Raumbereichs. Der Sensor umfasst eine Sendeeinrichtung umfassen, die eine elektromagnetische Strahlung aussendet, und eine Empfangseinrichtung zur Erfassung von Strahlung, insbesondere reflektierter, von der Sendeeinrichtung ausgestrahlter Strahlung, wobei der Sensor in der Lage ist, mittels der erfassten Strahlung Objekte im Überwachungsbereich zu detektieren und insbesondere auch deren Abstand zum Sensor zu ermitteln. Zusätzlich sind Mittel zur Durchführung einer Funktionsprüfung für wenigstens eine Sensorkomponente vorgesehen.

Der Überwachungssensor zeichnet sich dadurch aus, dass er dazu ausgelegt ist, an einem Eingang zum Empfang von Signalen ein Testsignal eines externen Signalgebers zu erfassen, und bei detektiertem Signal den Überwachungssensor von einem passiven Zustand in einen aktiven Zustand zu schalten, und nach Ablauf einer Aktivierungszeitspanne "t2" den Überwachungssensor in einen Prüfzustand zu schalten, und nach Ablauf einer Prüfzeitspanne "t3" ein Ausgangssignal eines Ausgangs des Überwachungssensors zu ändern, wobei diese Ausgangssignaländerung einem Signal entspricht, das entsteht, wenn der Überwachungesensor nach Detektion eines Objektes einen Schaltvorgang auslöst, und nach Erfassung der Rücknahme des Testsignals das Ausgangssignal wieder in den Ausgangszustand zu überführen, und diese erneute Signaländerung als Signal für einen externen Signalgeber zur Verfügung zu stellen, wobei der Überwachungssensor nach diesem Signalablauf in den Überwachungszustand übergeht.

Hierdurch kann eine deutliche Reduzierung des Energieverbrauchs für den betreffenden Sensor dahingehend erzielt werden, dass er während Zeiten, in denen keine Überwachung des Überwachungsbereichs erforderlich ist, eine solche auch nicht durchführt und die dafür anderenfalls erforderliche Energie einspart. Dies wirkt sich besonders vorteilhaft für solche Sensoren aus, die beispielsweise leitungsungebunden sind und autonome Energiequellen wie Batterien, Akkus oder dergleichen aufweisen.

Im Weiteren kann hierdurch auch eine Standzeitverlängerung aufgrund einer deutlich reduzierten Gesamtbetriebszeit für den aktiven Betrieb des Sensors, insbesondere seiner Abwärme erzeugenden Komponenten, erreicht werden.

Durch den vorgeschlagenen Sensoraufbau kann dieser dennoch jederzeit einer übergeordneten Steuerung, z. B. einer Türsteuerung, als Prüfeinheit zur Signalisierung dienen, und signalisieren, ob durch eine Betätigung des zur Ansteuerung angeforderten Bewegungselementes, Tür, Tor, Fenster oder dergleichen, ggf. eine Gefahr für ein sich in diesem Bewegungsbereich oder in dessen Nähe befindliches Objekt besteht.

In vorteilhafter Weise kann der Sensor bezüglich des Energiesparens und/oder der Verlängerung der Standzeit des Sensors, insbesondere seiner temperaturbelasteten Komponenten, dazu ausgelegt sein, aus dem betriebsbereiten Zustand in einen passiven Zustand zu schalten, beispielsweise nach Ablauf einer bestimmten zeit und/oder bei einer Detektion eines für diesen Zweck vorgesehenen, externen Signals.

Der Überwachungssensor kann eine bildgebende Optik umfassen, die eine Objekterkennung ermöglicht, wie z. B. ein CCD-Chip oder dergleichen, beispielsweise mit matrixförmiger Auflösung. Insbesondere bevorzugt kann ein solcher Sensor in der Weise einer 3D-Erkennung auch Entfernungen messen, insbesondere bevorzugt für jeden einzelnen Bildpunkt separat. Das heißt für jedes erfasste Pixel kann neben der Bewertung, ob hierfür ein Objekt erkannt wird oder nicht, zusätzlich auch die Distanz zwischen dem Sensor und dem von ihm als Bildpunkt erkannten, tatsächlichen Gegenstands, wie z. B. einem Objekt oder anderenfalls beispielsweise dem Boden oder einer Wand, ermittelt werden. ,

Eine Detektion von Objekten in dem vom Sensor zu überwachenden Überwachungsbereich kann insbesondere dadurch erfolgen, dass die Sendeeinrichtung veranlasst wird, Strahlung auszusenden, z. B. von einer ihr zugeordneten Kontrolleinheit, beispielsweise in der Form eines Prozessors. Bei korrekter Funktionsweise der Sendeeinrichtung, z. B. eines elektromagnetische und/oder akustische Strahlung aussendenden Sendeelementes, emittiert diese eine entsprechende Strahlung, vorzugsweise direkt in die Richtung des zu überwachenden Raumbereichs. Entsprechend der Reflexionseigenschaften der von dieser emittierten Strahlung beaufschlagten Oberflächen, wie z. B. Boden, Wände und insbesondere Objekte, kann ein entsprechender Anteil der auftreffenden Strahlung davon reflektiert werden, insbesondere auch zurück in die Richtung der zum Sensor gehörenden Empfangseinrichtung, zur Erfassung von Strahlung. Bei korrekt arbeitender Empfangseinrichtung kann diese Empfangseinrichtung die reflektierte Strahlung auswerten.

In einer bevorzugten Ausführungsform kann der Überwachungssensor im Infrarot-Wellenlängenbereich arbeiten, insbesondere bevorzugt mit gepulstem Infrarotlicht. Dies hat den Vorteil, dass der Sensor beispielsweise mit infrarotdurchlässigem Kunststoff abgedeckt und so gegen äußere Einflüsse geschützt werden kann, sodass auch in gegebenenfalls stärker von Umwelteinflüssen betroffenen Montagebereichen ein langzeitstabiler Betrieb eines solchen Sensors möglich ist. Ein Pulsbetrieb kann eine weitere Reduzierung der Gesamtleistung und insbesondere der im überwiegenden Maße als Abwärme auftretenden Verlustleistung ermöglichen, beispielsweise im Vergleich zu einem dauerhaft betriebenen Sensor.

Die Basis der Distanzermittlung der einzelnen Bilderfassungspunkte ist eine so genannte "Time-of-flight" (TOF) Methode, bei dem die Laufzeit eines modulierten Signals zur Distanzermittlung herangezogen wird. In einer dem gegenüber abgewandelten Ausführungsform kann aber auch eine Phasendifferenzmessung hierfür vorgenommen werden.

Weiter bevorzugte Ausführungsformen eines solchen Überwachungssensors können beispielsweise eine oder mehrere Lichtschranken umfassen. Diese können beispielsweise einen Lichtvorhang und/oder ein Lichtgitter ausbi-den, um z. B. entsprechende Sicherheitsfunktionen zu realisieren. Hierdurch können beispielsweise größere Durchganges- und/oder Durchfahrbereiche überwacht werden.

In einer weiter bevorzugten Ausführungsform kann der Überwachungssensor auch eine Identifikationsmittel-Leseeinheit umfassen. Hierdurch ist beispielsweise die Realisierung einer Zugangskontrolle möglich.

In einer überdies bevorzugten Ausführungsform kann e'-ne Auswerteanordnung vorgesehen sein, die dazu ausgelegt ist, eine Komponente und/oder ein Signal des Überwachungssensors, insbesondere ein Signal der Empfangseinrichtung, basierend auf einer Empfangstätigkeit beim Vorgang eines Sendebetriebs und/oder ein Signal der Sendeeinrichtung auf Plausibilität hin zu überprüfen.

Unter Plausibilität wird hierbei zum einen verstanden, dass geprüft wird, ob an der zu prüfenden Komponenten überhaupt ein Signal in der Art detektiert werden kann, welches im entsprechenden Betriebszustand des Sensors zu erwarter ist. Zum anderen wird auch die überprüfung, ob der Wert für ein ggf. detektiertes Signal in einem zu erwartenden Wertbereich liegt, als im Sinne der beanspruchen Plausibilitätsprüfung liegend verstanden.

Als zu überprüfendes Signal werden erfindungsgemäß sowohl Eingangssignale als auch Ausgangssignale der zu prüfenden Sensorkomponenten verstanden. Z. B. ein elektrisches Potenzial, dass zwischen zwei Schaltungspunkten entweder aufgrund einer Versorgung mit der betreffenden Betriebsspannung beaufschlagt werden müsste und/oder durch Erzeugung eines Potenzialunterschiedes zwischen zwei Schaltungspunkten, als Reaktion eines Sensorelementes auf eine Einwirkung auf dieses, wie Z. B. der Beaufschlagung einer Strahlung auf ein fotoelektrisches Element ur.d/oder auf ein Akustik erfassendes Element. Auch ein elektrischer Strom, der in einem bestimmten Schaltungsbereich fließt, Z. B. durch einen Anschlusspunkt eines Sensorelementes oder dergleichen wird in diesem Sinne als Signal verstanden.

Als Signale werden auch, von der Sendeeinrichtung abgegebene Strahlung und/oder andere, von anderen Quellen als der des Sensors stammende Strahlung oder dergleichen Signale verstanden, die von einer Sensorkomponente aufgrund einer entsprechenden Ansteuerung, z. B. mit Beaufschlagung der erforderlichen Betriebsspannung erzeugt werden. Neben elektromagnetischer Strahlung wird hierbei auch jede weitere Strahlung verstanden, wie z. B. akustische.

In einer weiter bevorzugten Ausführungsform kann der Überwachungssensor dazu ausgelegt sein, an einem Eingang zum Empfang von Signalen eines externen Signalgebers ein Modifikationssignal zu erfassen, und bei detektiertem Signal den Sensor von einem passiven Zustand in einen aktiven Zustand zu schalten, und nach Ablauf der Aktivierungszeitspanne den Sensor -n einen Modifikationszustand zu schalten, und nach Ablauf der Aktivierungszeitspanne Modifikationen an der Schaltung des Sensors vorzunehmen und/oder Daten an einem Ausgang des Sensors für einen externen Empfänger bereitzustellen.

Hierdurch kann der Sensor beispielsweise auf Anfrage einer externen Kontrolleinheit zu Parameter reagieren und/oder diese Parameter ggf. auch ändern. Möglich sind beispielsweise auch Modifikationen an der Schaltung des Sensors, z. B. an einem Softwareprogramm. Ermöglicht kann hierdurch aber auch die Behandlung von ggf. erkannten Problemen werden. In einem einfachen Fall kann hierbei ggf, ein Neustart des Sensors initiiert werden, abhängig von der Komplexität des erkannten Fehlers kann ggf. das Aufspielen eines neuen Programms ermöglicht werden.

In weiter vorteilhafter Weise kann der Sensor eine Kontrolleinheit umfassen, mittels der wenigstens Teile der Komponenten des Sensors konzrolliert werden können. Bevorzugt kann der Sensor auch zwei Kontrolleinheiten umfassen, die sich beispielsweise die Kontrolle einzelner Baugruppen untereinander aufteilen können, wie Z. B. die Sendeeinheit und die Empfangseinheit. In weiter vorteilhafter Weise können auch die übrigen, oben beschriebenen Sende- und Empfangskomponenten von der einen oder anderen dieser beiden Kontrolleinheiten und/oder auch von beiden kontrolliert werden.

### Ausführungsformen:

Nachfolgend werden unter Bezug auf die beigefügten Figuren beispielhafte Ausführungsformen beschrieben.

### Es zeigen die

- Figur 1 und 2: rein beispielhaft und schematisch zwei mögliche Ausführungsformen eines erfindungsgemäßen Sensors und
- Figur 3: ein Schaltdiagramm.

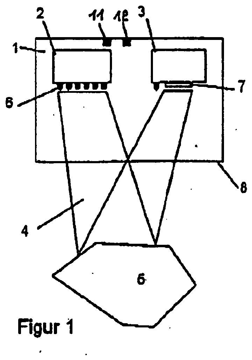

Demgemäß zeigt die Figur 1 einen Überwachungssensor 1 für die Überwachung eines Überwachungsbereichs, insbesondere eines im Öffnungsbereich einer Tür liegenden Raumbereichs. Als Überwachungsbereich wird insbesondere jeder Bereich verstanden, in dem eine Gefährdung von Objekten (Personen, Tiere und/oder Gegenstände, ...) durch eine Bewegung einer angetriebenen Schließvorrichtung, wie z. B. Tür, Tor, Fenster oder dergleichen möglich ist.

Um ein ggf. in dem zu überwachenden Raumbereich eindringendes und/oder darin anwesendes Objekt 5 detektieren zu können, ist der Sensor mit einer Sendeeinrichtung 2 ausgestattet. Diese umfasst im dargestellten Ausführungsbeispiel beispielhaft sechs einzelne Sendeelemente 6, z. B. in der Form von Sende-LEDs. Diese können beispielsweise im Infrarotbereich arbeiten. Der von ihnen ausgestrahlte Strahlenkegel 4 wird an der Oberfläche eins hier beispielhaft dargestellten Objektes 5 zurück zum Sensor 1 und zu einer dieser zugehörigen Empfangseinheit 3 reflektiert.

Die Empfangseinheit 3 umfasst einen Strahlensensor 7, der beispielsweise matrixförmig angeordnete, einzelne Strahlenempfangselemente aufweist, sodass hierdurch eine bildgebende Szenenerfassung für den zu überwachenden überwachungsbereich möglich ist. Insbesondere vorteilhaft kann dieser Strahlensensor 7 so ausgebildet sein, dass er für jedes einzelne Pixel auch den Abstand zwischen ihm und der Oberfläche ermitteln kann, an welcher die von der Sendeeinrichzung 2 abgegebene Strahlung reflektiert wurde. Damit kann in der Weise einer 3-D-Erkennung neben dem Vorhandensein eines ggf. im zu überwacherden Raumbereich befindlichen Objektes auch dessen Abstand zum Türsensor ermittelt werden.

Die Basis der Distanzermittlung der einzelnen Bilderfassungspunkte ist eine so genannte "Time-of-flight" (TOF) Methode, die mit einem sogenannten TOF-Sensor umgesetzt wird. Dabei wird die Laufzeit eines modulierten Signals zur Distanzermittlung herangezogen. Insbesondere kann die Laufzeit durch eine Phasendifferenzmessung gewonnen werden.

Zum Schutz der einzelnen sensorkomponenten kann der Sensor 1 ein Gehäuse 8 umfassen, welches insbesondere vorteilhaft für die vom Sender ausgesandte Strahlung durchlässig ist.

Zur Kommunikation mit außen kann der Sender im Weiteren einen Eingang 11 und einen Ausgang 12 aufweisen, z. B. in der Form von leitungsgebundenen Anschlüssen. Diese können beispielsweise als Drahtanschlüsse, Optokoppler oder dergleichen andere Anschlüsse für Signalein- und/oder - ausgänge sein.

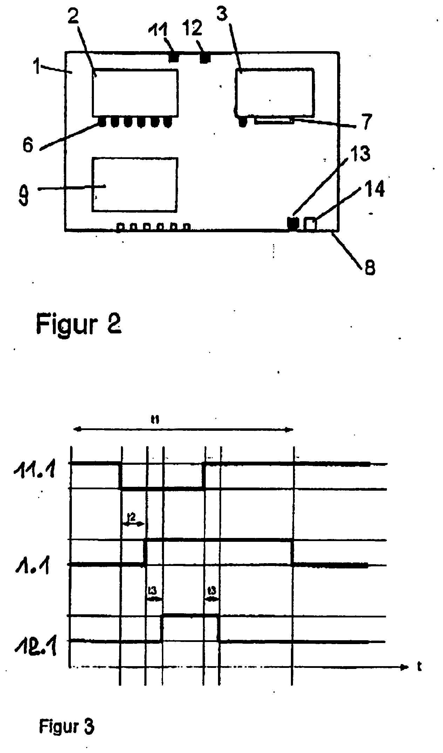

Als übergeordnete Instanz kann der Überwachungssensor im Weiteren eine Kontrolleinheit 9 umfassen (Fig. 2). Hierin kann beispielsweise eine Schaltung angeordnet sein, mittels der eine Abfrage von am Eingang 11 anliegenden Signalen 11.1 (Fig. 3) möglich ist, um darauf basierend eine Reaktion im Überwachungssensor auszulösen. Auch eine Anbindung an den Ausgang 12 ist vorgesehen, um hieran ein Ausgangssignal 12.1 anzulegen, um eine Information an eine externe, beispielsweise übergeordnete Instanz, wie z. B. eine Tür- und/oder Torsteuerung abzusetzen.

Als alternative Kommunikationsmöglichkeit kann beispielsweise ein leitungsungebundener Sensoreingang 13 und ein leitungsungebundener Ausgang 14 zum Empfang eines Signals einer externen Signaleinheit bzw. zur Übermittlung eines Ausgangssignals an eine solche externe Einheit vorgesehen sein. Der Einfachheit halber werden diese beiden Signale nachfolgend ebenfalls mit 11.1 bzw. 12.1 beschrieben.

Die Reaktion, die der Überwachungssensor bei Erkennung eines Eingangssignals 11.1 durchführt, ist eine Aktivierung aus einem passiven Zustand in einen aktiven Zustand. Ihm kann sich ein Prüfzustand anschließen, in welchem Komponenten und/oder Signale auf Plausibilität hin überprüft werden können.

Bei einem Ausführungsbeispiel wird zusätzlich und/oder alternativ hierzu dem Überwachungssensor in entsprechender Weise ein Modifikationssignal übermittelt, woraufhin er sich in einen Modifikationszustand schaltet. Auch hierzu können entsprechende Änderungen an den Eingängen 11, 13 bzw. an den Ausgängen 12, 14 vorgesehen sein.

Zum Signalverlauf entsprechend der Figur 3 gilt Folgendes: Sobald eine Anforderung über eine Pegeländerung am Eingang 11 und/oder 13 erkannt wird, kann der Sensor in einen aktiven Zustand umschalten und nach Ablauf einer Aktivierungszeitspanne sich in einen Prüfzustand schalten, indem er die oben beschriebenen Prüfvorgänge durchführt. Nach Ablauf der hierfür erforderlichen Aktivierungszeitspanne sowie der sich anschließenden Prüfzeitspanne ändert der Sensor ein an seinem Ausgang 12 und/oder 14 anliegendes Signal, wobei diese Ausgangssignaländerung einem Signal entspricht, das entsteht, wenn der Sensor nach Detektion eines Objekts einen Schaltvorgang auslöst. Anschließend kann der Sensor, nachdem eine Rücknahme des am Eingang 11 und/oder 13 anliegenden Signals detektiert wurde, das am Ausgang angelegte Signal wieder in den Ausgangszustand zurück überführen, wobei diese erneute Signaländerung als Signal für einen externen Signalgeber zur Verfügung steht und wobei der Sensor nach diesem Signalablauf in den Betriebszustand übergeht. Für die in Fig. 3 beispielhaft dargestellten Signalverläufe gilt, dass das Signal 11.1 dem am Eingang 11 oder 13 anliegenden Signal einer externen Einheit entspricht, das Signal 1.1 dem Zustand "passiv" des Überwachungssensors, bzw. nach seiner Änderung "aktiv" und nach Ablauf einer Zeit "t1" wieder dessen Rücknahme in den Zustand "passiv", sowie das Signal 12.1 das am Ausgang 12 und/oder 14 anliegende Ausgangssignal des Sensors 1.

Nach Ablauf einer bestimmten Zeit und/oder nach einer Signalisierung über ein Eingangssignal 11.1 an einem Eingang 11 und/oder 13 kann der Oberwachungssensor sich wieder in einen sog. Ruhezustand zurücksetzen.

Hierdurch ist der Sensor in der Lage, während einer Zeit, während derer keine Überwachung des zu überwachenden Überwachungsbereichs erforderlich ist, in energiesparender und die Standzeit des Sensors, insbesondere einzelner Komponenten, wie seiner Sendeeinheiten, verlängernder Weise in einen so genannten Ruhemodus zu schalten.

Sender 6 und Empfänger 7 können beispielsweise auch als Lichtschranke funktionieren. In der Darstellung in der Fig. 1 kann dies beispielsweise eine über eine Reflexionsfläche wirksame Lichtschranke sein. Aufgrund der mehreren Sender und Empfänger kann damit auch ein sog. Lichtvorhang oder Lichtgitter realisiert werden.

Die Ein- und Ausgänge 13, 14 können beispielsweise auch zur Realisierung einer Identifikationsmittel-Leseeinheit herangezogen werden. Beispielsweise könnte hiermit ebenfalls eine Abgabe von elektromagnetischer Strahlung durch den Ausgang 13 erfolgen und bei entsprechender Rückmeldung an den Eingang 14 eine Kontrolle erfolgen, ob eine Zugangsberechtigung vorliegt.

### Bezugszeichenliste:

- 1: Überwachungssensor
- 2: Sendeeinrichtung
- 3: Empfänger
- 4: IR-Licht
- 5: Objekt
- 6: Sende-LED
- 7: Strahlungssensor TOF-Chip
- 8: Gehäuse
- 9: Kontrolleinheit
- 11: Eingang
- 12: Ausgang
- 13: Empfänger/Eingang
- 14: Sender/Ausgang

## Patentansprüche

1. Überwachungssensor (1) für die Überwachung eines Überwachungsbereichs (2), wobei der Überwachungssensor eine Kontrolleinheit (9) umfasst und dazu ausgebildet ist, an einem Ausgang (12) ein Ausgangssignal (12.1) anzulegen, um eine Information an eine externe Instanz abzusetzen und nach Detektion eines Objekts das am Ausgang anliegende Signal zu ändern und einen Schaltvorgang auszulösen, wobei der Überwachungssensor dazu ausgelegt ist, an einem Eingang (11) zum Empfang von Signalen ein Testsignal (11.1), das eine Pegeländerung aufweist, eines externen Signalgebers zu erfassen, und bei detektiertem Signal den Überwachungssensor von einem passiven Zustand in einen aktiven Zustand zu schalten, und nach Ablauf einer Aktivierungszeitspanne (t2) zur Aktivierung aus dem passiven in den aktiven Zustand den Überwachungssensor in einen Prüfzustand zu schalten, und nach Ablauf einer sich anschließenden Prüfzeitspanne (t3) ein Ausgangssignal (12.1) eines Ausgangs (12) des Überwachungssensors zu ändern, wobei diese Ausgangssignaländerung einem Signal entspricht, das entsteht, wenn der Überwachungssensor nach Detektion eines Objektes einen Schaltvorgang auslöst, und nach Erfassung der Rücknahme des Testsignals (11.1) das Ausgangssignal (12.1) wieder in den Ausgangszustand zu überführen, und diese erneute Signaländerung als Signal für den externen Signalgeber zur Verfügung zu stellen, wobei der Überwachungssensor nach diesem Signalablauf in den Überwachungszustand übergeht,
**dadurch gekennzeichnet, dass**
der Sensor ein TOF (time of flight) Sensor ist.

2. Überwachungssensor nach Anspruch 1, **dadurch gekennzeichnet, dass** der Überwachungssensor einen 3-D-Sensor umfasst.

3. Überwachungssensor nach einem der vorangehenden Ansprüche, **dadurch gekennzeichnet, dass** der Überwachungssensor mindestens eine Lichtschranke umfasst.

4. Überwachungssensor nach einem der vorangehenden Ansprüche, **dadurch gekennzeichnet, dass** der Überwachungssensor eine Identifikationsmittel-Leseeinheit umfasst.

5. Überwachungssensor nach einem der vorangehenden Ansprüche, **dadurch gekennzeichnet, dass** während des Prüfzustandes eine Plausibilitätsprüfung für ein Signal der Empfangseinrichtung, basierend auf einer Empfangstätigkeit beim Vorgang eines Sendebetriebs, und/oder für ein Signal der Sendeeinrichtung durchgeführt wird.

6. Überwachungssensor nach einem der vorangehenden Ansprüche, **dadurch gekennzeichnet, dass** der Überwachungssensor dazu ausgelegt ist, aus dem betriebsbereiten Zustand in den passiven Zustand zu schalten.

## Claims

1. A monitoring sensor (1) for monitoring a monitoring area (2), wherein the monitoring sensor comprises a control unit (9) and is designed to apply an output signal (12.1) to an output (12) in order to send information to an external entity and, upon detecting an object, to change the signal applied at the output and initiate a switching operation, wherein the monitoring sensor is designed to detect, at an input (11) for receiving signals, a test signal (11.1), having a level change, of an external signal generator, and to switch the monitoring sensor from a passive state to an active state when a signal is detected, and to switch the monitoring sensor to a test state after an activation period of time (t2) for activation from the passive to the active state has passed, and, after a subsequent test period of time (t3) has passed, to change an output signal (12.1) of an output (12) of the monitoring sensor, wherein this output signal change corresponds to a signal that arises when the monitoring sensor triggers a switching process upon detecting an object and, upon detecting the cancellation of the test signal (11.1), to convert the output signal (12.1) back to the initial state, and to provide this renewed signal change as a signal for the external signal generator, wherein the monitoring sensor changes to the monitoring state after this signal sequence,
**characterised in that**
the sensor is a TOF (time of flight) sensor.

2. The monitoring sensor according to claim 1, **characterised in that** the monitoring sensor comprises a 3-D sensor.

3. The monitoring sensor according to any one of the preceding claims, **characterised in that** the monitoring sensor comprises at least one light barrier.

4. The monitoring sensor according to any one of the preceding claims, **characterised in that** the monitoring sensor comprises an identification means reading unit.

5. The monitoring sensor according to any one of the preceding claims, **characterised in that**, during the test state, a plausibility check is carried out for a signal from the receiving device, based on a receiving activity during a transmission operation, and/or for a signal from the transmitting device.

6. The monitoring sensor according to any one of the preceding claims, **characterised in that** the monitoring sensor is designed to switch from the operationally ready state to the passive state.

## Revendications

1. Capteur de surveillance (1) pour surveiller une zone de surveillance (2), le capteur de surveillance comprenant une unité de commande (9) et étant conçu pour appliquer un signal de sortie (12.1) à une sortie (12) afin d'envoyer des informations à une entité externe et après la détection d'un objet, pour modifier le signal se trouvant au niveau de la sortie et pour lancer une opération de commutation, le capteur de surveillance étant conçu pour détecter au niveau d'une entrée (11) dédiée à recevoir des signaux un signal de test (11.1) lequel présente une modification de niveau et provenant d'un générateur de signaux externe, et pour faire commuter le capteur de surveillance d'un état passif à un état actif lorsqu'un signal est détecté, et après une période d'activation (t2) pour l'activation de l'état passif à l'état actif pour faire commuter le capteur de surveillance dans un état de test, et après une période de test subséquente (t3) pour modifier un signal de sortie (12.1) d'une sortie (12) du capteur de surveillance, cette modification du signal de sortie correspondant à un signal qui survient lorsque le capteur de surveillance déclenche un processus de commutation après la détection d'un objet, et après la détection du retrait du signal de test (11.1) pour faire passer de nouveau le signal de sortie (12.1) à l'état initial, et mettre à disposition cette nouvelle modification du signal en tant que signal pour le générateur de signaux externe, le capteur de surveillance passant à l'état de surveillance après ce cycle de signal,
**caractérisé en ce que**
le capteur est un capteur TOF (temps de vol).

2. Capteur de surveillance selon la revendication 1, **caractérisé en ce que** le capteur de surveillance comprend un capteur 3D.

3. Capteur de surveillance selon l'une quelconque des revendications précédentes, **caractérisé en ce que** le capteur de surveillance comprend au moins une barrière lumineuse.

4. Capteur de surveillance selon l'une quelconque des revendications précédentes, **caractérisé en ce que** le capteur de surveillance comprend une unité de lecture de moyens d'identification.

5. Capteur de surveillance selon l'une des revendications précédentes, **caractérisé en ce que** pendant l'état de test un contrôle de vraisemblance est effectué pour un signal du dispositif récepteur, sur la base d'une activité de réception pendant une opération de transmission, et/ou pour un signal du dispositif émetteur.

6. Capteur de surveillance selon l'une quelconque des revendications précédentes, **caractérisé en ce que** le capteur de surveillance est conçu pour passer de l'état opérationnel à l'état passif.
